# EUROPEAN PATENT APPLICATION

(11) **EP 1 538 540 A2**
(43) Date of publication of application: **08.06.2005**
(21) Application number: 04023480.9
(22) Date of filing: 01.10.2004
(51) Int. Cl.: G06F 17/50

(54) **Configurable circuit with cells having predefined functionality and configurable subcells**

(30) Priority: 01.12.2003 US 724949
(71) Applicant: LSI LOGIC CORPORATION, Milpitas, CA 95035 (US)
(72) Inventor: Auracher, Stefan, 82065 Baierbrunn (DE); Pribbernow, Claus, 80339 München (DE); Hils, Andreas, 82008 Unterhaching (DE)
(74) Representative: Holmes, Miles

(57) **Abstract**

An integrated circuit comprising a die having a surface. The die may comprise first and second areas. The first area may comprise first circuit cells. The first circuit cells may be configurable by user defined interconnections from above the surface. The second area may comprise a plurality of sub-circuit cells. The sub-circuit cells may form a module having a predefined functionality. The sub-circuit cells may include at least one second circuit cell. The second circuit cell may be configured such that when the predefined functionality of the module is not used, the second circuit cell is configurable by user defined interconnections from above the surface.

## Description

### Field of the Invention

The present invention may relate generally to the field of integrated circuits, and the design and manufacture thereof. In one aspect, the invention may relate to a design technique in which a custom integrated circuit may be designed based on a predefined layout of integrated circuit elements.

### Background to the Invention

Application Specific Integrated Circuits (ASICs) and Field Programmable Gate Arrays (FPGAs) provide different technologies for implementing a custom integrated circuit. However, there is significant commercial and technical gap between ASIC and FPGA technologies. An ASIC is custom designed for a specific circuit application. An ASIC can offer optimum performance, but designing an ASIC is expensive and time-consuming. Circuit faults in ASICS can also be difficult and expensive to correct. An ASIC is also expensive to manufacture if in small volumes. An FPGA is a general purpose array of logic gates that can be configured as a custom circuit. An FPGA provides greater versatility than an ASIC, because an FPGA is not custom designed for a specific application. Although generally less expensive than an ASIC, an FPGA does not contain dedicated circuitry, and is less optimized than an ASIC. An FPGA has a certain amount of circuit overhead to facilitate the programmability of the FPGA, and is not useable as part of the custom circuit.

It would be desirable to implement a custom circuit efficiently within an integrated circuit that can include custom-independent fabrication layers and custom-specific fabrication layers.

### Summary of the Invention

The present invention may relate to an integrated circuit. The integrated circuit may comprise a die. The die may have a surface. The die may comprise first and second areas. The first area may comprise first circuit cells. The first circuit cells may be configurable by user defined interconnections from above the surface. The second area may comprise a plurality of sub-circuit cells. The sub-circuit cells may form a module having a predefined functionality. The sub-circuit cells may include at least one second circuit cell. The second circuit cell may be configured such that when the predefined functionality of the module is not used, the second circuit cell is configurable by user defined interconnections from above the surface.

Advantages, features and objects of the invention may include: (i) enabling cells of a module that is not selected for use, to be available as reusable resources; (ii) providing a module architecture to enable cells to be reused if the module is not selected for use; (iii) enabling control of which cells of a module are available for re-use if the module is not selected for use; (iv) providing different representations of a module with different degrees of cell reusability; (v) enabling efficient routing of a connection wire directly over a module that is not selected for use; (vi) reducing or avoiding leakage currents associated with cells of unused modules; and/or (v) extending a versatility of an integrated circuit by distributing sub-circuits within a general-purpose area of the integrated circuit. Other features, objects and advantages of the invention will become apparent from the following description, claims and/or drawings.

### Brief Description of the Drawings

Non-limiting preferred embodiments of the invention are now described, by way of example only, with reference to the claims and accompanying drawings, in which:
Fig. 1 is a schematic vertical section through a first embodiment of an integrated circuit die;
Fig. 2 is a schematic horizontal section along the line II-II of Fig. 1;
Fig. 3 is a schematic vertical section showing a module of the die of Fig. 1;
Fig. 4 is a schematic horizontal section along the line IV-IV of Fig. 3, showing the module in more detail;
Fig. 5 is a flow diagram of a design process for designing a module in accordance with a preferred embodiment of the present invention;
Figs. 6a-c are schematic horizontal sections similar to Fig. 4 illustrating different design representations of the module of Fig. 4;
Fig. 7 is an enlarged vertical section along the line VII of Fig. 6a;
Fig. 8 is an enlarged vertical section along the line VIII of Figs. 6b and 6c;
Fig. 9 is a flow diagram of a customization process for forming a die in accordance with a preferred embodiment of the present invention;
Fig. 10 is a block diagram illustrating routing over an unused module;
Fig. 11 is a block diagram illustrating routing using uncommitted resources of an unused module;
Fig. 12 is a schematic block diagram illustrating a second embodiment of an integrated circuit die;
Figs. 13a and 13b are schematic block diagrams illustrating in more detail orthogonal buffer sub-circuits in the die of Fig. 12; and
Fig. 14 is a more detailed block diagram illustrating logic array sub-circuits in the die of Fig. 12.

### Description of Preferred Embodiments

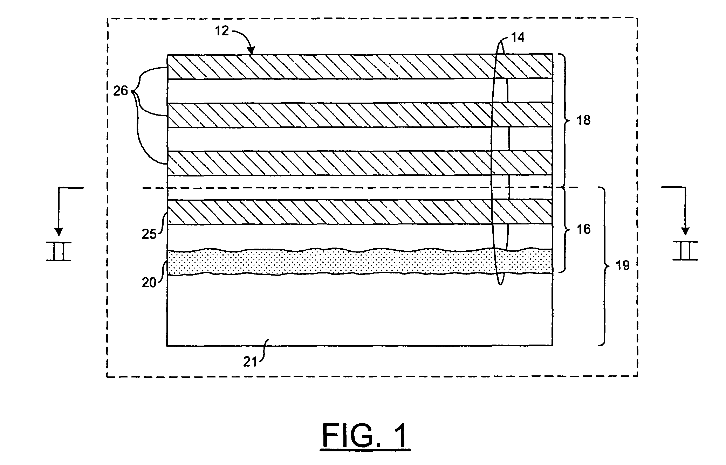

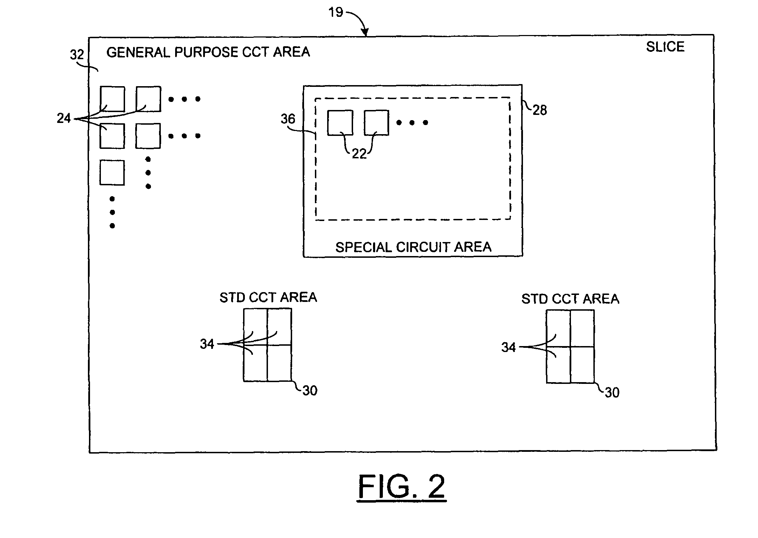

Referring to Figs 1 and 2, an integrated circuit (IC) 10 is shown. The IC may comprise a die 12 within which a circuit 14 may be implemented. The circuit 14 may be, in one example, a logic circuit. The circuit 14 may be a custom circuit for a dedicated circuit application. The die 12 may include one or more patterned custom-independent layers 16 and one or more patterned custom-specific layers 18 (for the sake of clarity, the patterning is not shown in Fig. 1). The custom-independent layers 16 may be referred to as base layers. The custom independent layers 16 may be pre-designed for a certain general type of circuit application prior to customization. Customization for a specific circuit application may be provided by the custom-specific layers 18. Different dies 12 with different customizations (e.g., different custom-specific layers 18) may include the same custom-independent layers 16.

A portion of the die 12 including only the custom-independent layers 16 may be referred to as a slice 19. In general, a slice is a single die with one or more prefabricated layers. The slice 19 may be pre-fabricated as an intermediate product, and kept as a stock item. In one example, a wafer may contain a number of slices. The wafer may be kept in stock for later customization. The individual slices may be customized prior to or subsequent to dicing of the wafer. The die 12 may be customized by adding one or more custom-specific layers 18 to the pre-fabricated slice 19. The slice 19 may be fabricated efficiently irrespective of a number of dies 12 of a particular customization that may be ordered by a customer. Alternatively, the slice 19 may refer to a portion of a design of the die 12 that is fixed, whether or not the slice may be pre-fabricated as an intermediate product.

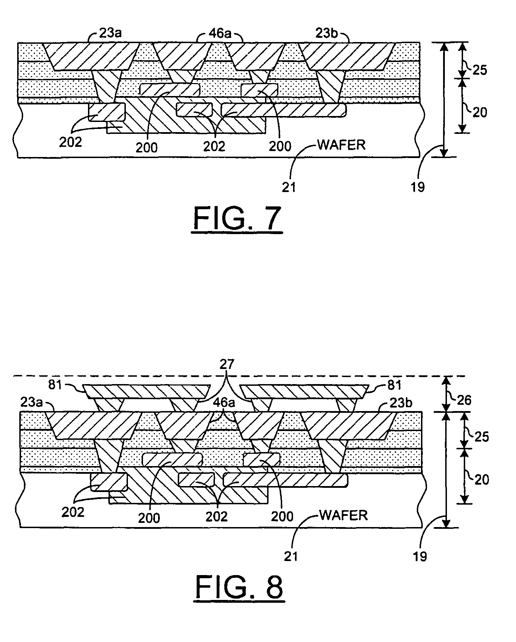

Referring to Figs. 1-3 and 8, the custom-independent layers 16 may comprise at least one integrated layer 20 in which one or more doped diffusion areas may be formed in or on a semiconductor wafer (or substrate) 21 (e.g., made of silicon). The custom-independent layers 16 may define active and/or passive circuit elements that may be coupled together in any manner defined by the custom-specific layers 18. As explained further below, the active and/or passive circuit elements may comprise specialized circuit elements 22 and general-purpose circuit elements 24. The custom-independent layers 16 may comprise at least one layer 25 of conductive material, for example, metal (e.g., aluminium, etc.). The conductive layer 25 may be patterned to provide power supply distribution lines 23 (e.g., one or more of a positive voltage, a ground voltage and a negative voltage) and contacts 46 (46a in Fig. 8) to the integrated layer 20.

The custom-specific layers 18 may comprise one or more interconnection layers 26 for providing connections to and/or between the circuit elements 22, 24, and connections to the power supply distribution layer 25 (e.g., vias). Each interconnection layer 26 may comprise conductive paths, for example, of metal (e.g., aluminium, etc.). Vias 27 may be formed between any of the layers 16 and 18. Vias between the custom-independent layers 16 may be fixed as part of the design of the custom-independent layers. Vias between the custom-specific layers 18 and/or between a custom specific layer 18 and an uppermost layer of the custom-independent layers 16 may depend on the customization of the slice 19.

Referring to Figs. 1 and 2, the slice 19 may be organized as one or more special circuit areas 28, one or more standard circuit areas 30, and one or more general-purpose circuit areas 32. For the sake of clarity, only a small number of the areas 28, 30 and 32 are illustrated. However, a greater or fewer number of areas may be implemented to meet the design criteria of a particular application. Also, one or more of the types of circuit areas 28, 30 and 32 may be omitted. The general-purpose circuit areas 32 may be areas that may not have a dedicated functionality and/or may be available for full customization. The general-purpose circuit areas 32 may comprise the general-purpose circuit elements 24. The general-purpose circuit elements 24 typically comprise, for example, logic gates (e.g., NOR gates, etc.) that may be interconnected to provide a functionality defined by the interconnection layers 26 of the custom-specific layers 18.

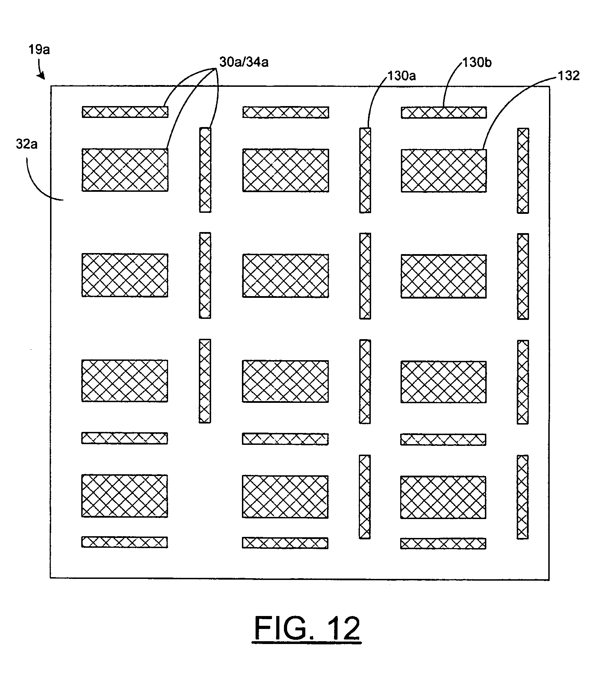

The standard circuit areas 30 may comprise pre-designed sub-circuits 34 that may be useful within the general-purpose circuit areas 32. The sub-circuits 34 may be referred to as being of low or medium complexity. For example, the sub-circuits 34 may comprise one or more of: buffers; registers; latches; flip-flops; multiplexers; inverters; counters; buffer stacks (e.g., LIFO or FIFO); memories (e.g. multi-location memories, such as memory arrays and/or addressable memories); and pre-built gates (e.g., complex gates, AND gates, OR gates, XOR gates) different from the general-purpose circuit elements 24. The sub-circuits 34 may include respective specialized circuit elements 22. The sub-circuits 34 may provide at least some dedicated functionality more efficiently than may be implemented by the general-purpose circuit elements 24. For example, a sub-circuit 34 that may be implemented using around five specialized transistors (e.g., specialized circuit elements 22) may replace as many as ten or more gates (e.g., general-purpose circuit elements 24) were an equivalent circuit to be implemented in the general-purpose circuit area 32. As illustrated by the example of Fig. 12 (described later), the standard circuit areas 30 may be distributed throughout the die 12 so as to be available locally at different locations across the die 12.

The special circuit areas 28 may provide complicated and/or advanced pre-designed circuit modules 36 that may be useful for the general type of circuit application for which the die 12 may be employed. The modules 36 may also be referred to as macros or as Intellectual Property (IP) blocks. The modules 36 may be referred to as medium or high complexity. The modules 36 may, for example, include one or more of: buffer stacks (e.g., LIFO or FIFO); multi-location memories (e.g. memory arrays and/or addressable memories); signal processor cores; general processor cores; numeric and/or mathematical processor cores; encoders; decoders; transmitters, receivers, communications circuits; analogue circuits; interface circuits; and/or hybrid circuits including combinations of the aforementioned. The modules 36 may comprise respective special circuit elements 22. The special circuit elements 22 may be optimized for the specific functionality of the modules 36. For example, the special circuit elements 22 may be physically smaller than the general-purpose circuit elements 24. The modules 36 in the special circuit areas 28 may provide a higher level of performance and/or greater compactness than may be achieved by implementing equivalent circuits using the general-purpose circuit areas 32. The modules 36 may provide circuits that may not be possible or practical to implement in the general-purpose circuit areas 32.

The above approach to a custom integrated circuit 10 may provide significant advantages and may bridge the commercial and technical gap between ASIC and FPGA integrated circuits. The sub-circuits 34 and/or the modules 36 may provide a level of performance and reliability normally associated with ASICs. The general-purpose circuit areas 32 and the custom-specific layers 18 may provide a versatility normally associated with FPGAs while reducing a hardware overhead inherent in FPGAs. Also, the use of custom-independent layers 16 may enable fabrication costs to be reduced. Design and/or testing and/or fabrication efficiency may be improved. The slices 19 may be pre-fabricated, tested and stored in inventory. The custom-specific layers may be added to a pre-fabricated slice 19 to form the finished (customized) die 12. Even if a designer decides not to use one or more of the sub-circuits 34 and/or modules 36 in a particular customization, the cost savings and other efficiencies resulting from implementing the slice 19 with fixed, custom-independent layers 16 may significantly outweigh the cost overhead of unused circuitry.

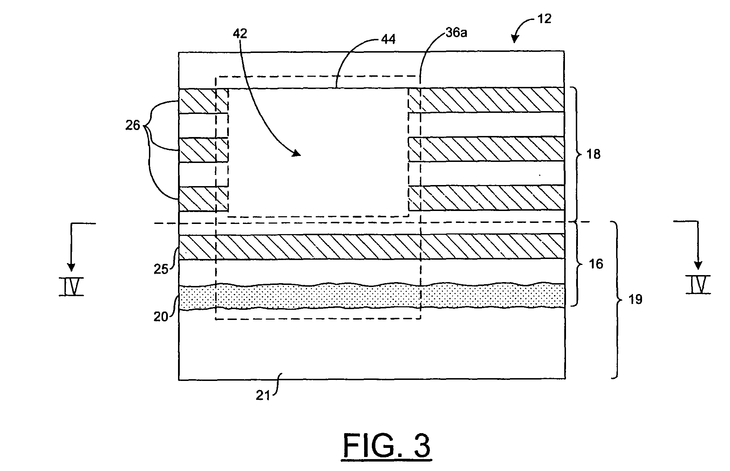

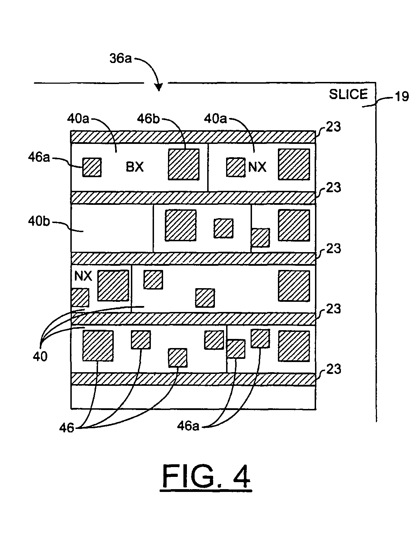

Referring to Figs. 3 and 4, a particular module 36a may comprise a plurality of circuit cells 40 that together form the module 36a. Each cell 40 may comprise respective specialized circuit elements 22. The cells 40 may have terminals 46 formed in the conductive layer 25 (e.g., the plane of Fig. 4). The term "terminals" may be used herein very broadly, and may encompass any form of metallization, pin or electrode to which an interconnection may be made. The terminals 46 may include at least one input terminal 46a and/or at least one output terminal 46b. When the designer employs the module 36a intact, appropriate connections to and/or between the cells 40 may be made by an arrangement of interconnections 42 within the interconnection layers 26 (custom-specific layers 18) overlying the cells 40. In Fig. 3, the arrangement of interconnections 42 are depicted as a general block to avoid cluttering the drawing. The interconnections 42 may define a reserved portion 44 of the custom-specific layers 18 that may be dedicated to the module 36a. The reserved portion 44 may extend into all of the custom-specific layers 18. A distinction between at least some of the sub-circuits 34 and the module 36a may be that the module 36a may comprise the plurality of circuit cells 40 and/or the reserved portion 44. When the designer chooses to use the module 36a, the reserved portion 44 may be unavailable for other uses, such as routing and/or other custom interconnections. The reserved portion 44 of the custom-specific layers 18 may not be available for customization.

When the designer chooses not to use the module 36a, at least some of the reserved portion 44 may be freed (made available) for other uses, such as routing and/or other custom interconnections. Additionally, the plurality of circuit cells 40 may remain in the slice 19 as part of the custom-independent layers 16 that are fixed in the design of the slice 19. The module 36a may have an architecture to enable at least some of the circuit cells 40 to be reusable resources when the module 36a is not chosen for use as a complete module 36a. The circuit cells 40 may include one or more reusable cells 40a having a functionality that may be re-useable. For example, the reusable cells 40a may be similar to the sub-circuits 34. The reusable cells 40a may, for example, include one or more buffers (BX) and one or more inverters (NX). Although not shown explicitly, the reusable cells 40a may additionally or alternatively include, for example, one or more of: registers; latches; flip-flops; multiplexers; counters; buffer stacks (e.g., LIFO or FIFO); memories (e.g. multi-location memories, such as memory arrays and/or addressable memories); and pre-built gates (e.g., complex gates, AND gates, OR gates, XOR gates, and NOR gates). All of the reusable cells 40a may have terminals 46 at the conductive layer 25, to enable customized connections to be made from the custom-specific layers 18 to the reusable cells 40a. All of the cells 40 of the module 36a may comprise reusable cells 40a, or at least some of the cells 40b may not be re-usable. The non-reusable cells 40b may comprise circuits that may be too design-sensitive to be re-useable outside the module 36a and/or may not have an independent functionality. Additionally or alternatively, the non-reusable cells 40b may be certain cells 40 which are not authorized for re-use. Multiple representations (or models or views) of the module 36a and/or the cells 40 may be prepared. Each representation may have a different level of reusability of the cells 40, to suit different design situations. The preferred embodiments may enable the reusable cells 40a to be used as (i) additional sub-circuits available within the custom design and/or (ii) repeater cells useful for routing signals within the die 12.

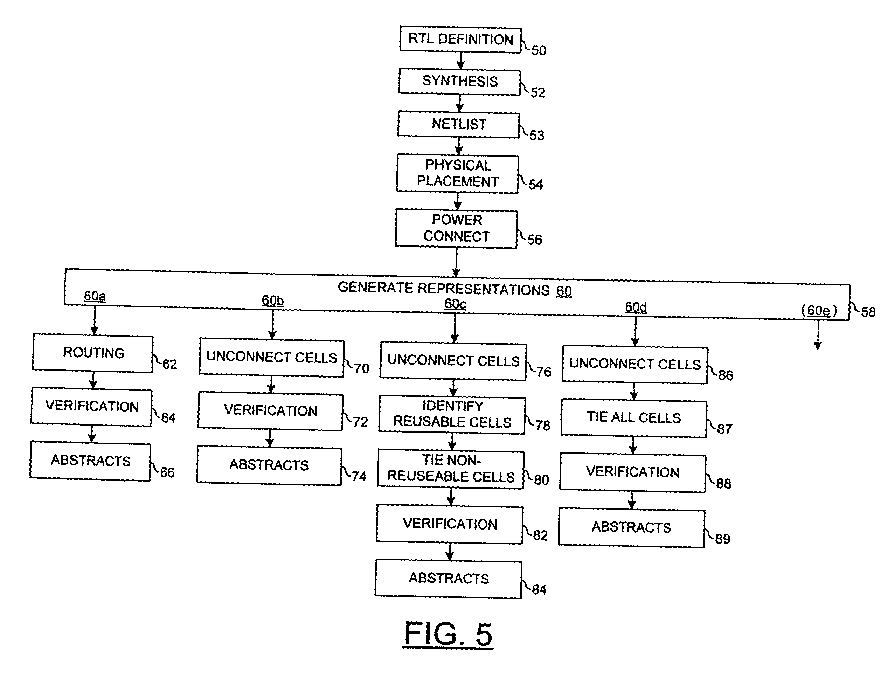

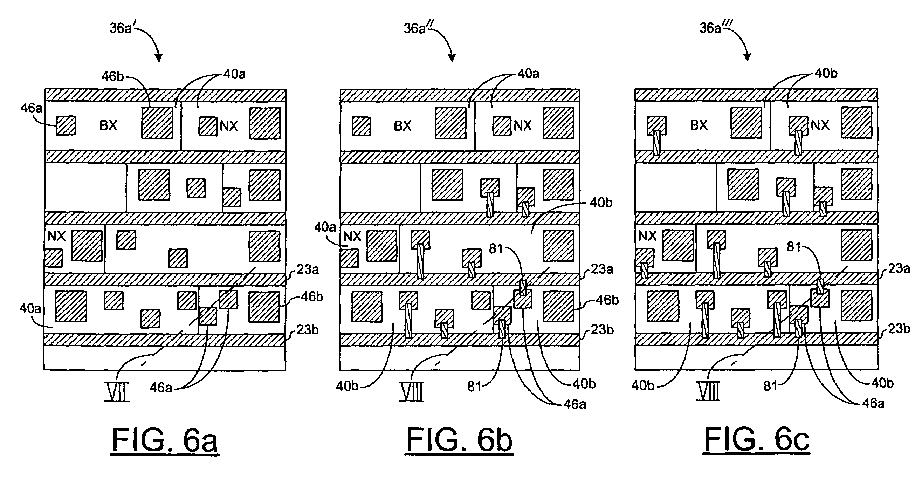

Figs. 5 and 6(a-c) may illustrate a design process for developing the module 36a for inclusion in the slice 19. The design process may be an initial design process performed prior to fabrication of the slice 19 (in contrast to a customization design process described later). The design process may be carried out at least partly using one or more computer programs executing on a computer. At a step 50, the functionality of the module 36a may be defined using a functional description (e.g., RTL) or hardware description language (HDL), such as Verilog or VHDL. At a step 52, the module 36a may be synthesised using a computer-based synthesis tool, and at a step 53, a netlist may be generated. The netlist may define the module 36a in terms of logical connections between the cells 40. The cells 40 may be selected by the synthesis tool from a pre-defined library of available cells 40. The netlist may define logical connections without specific physical placement of the cells 40 relative to each other.

At a step 54, the cells 40 may be physically placed relative to each other within the design of the module 36a, (e.g., by a computer-based cell placement tool). At a step 56, the design of power connections to the module 36a at the power distribution layer 25 may be carried out using a computer-based design tool, and routing lines may be defined for routing power to the cells 40 within the module. The step 56 may complete the definition of a portion of the design of the module 36a within the slice 19. The data produced at the step 56 may be sufficient for pre-fabrication of the slice 19. At a step 58, the process may proceed to generate a number of representations 60 for customization of the module 36a according to different design situations. In one example, four optional different representations 60a-d may be described. The method may be repeated from the step 58 for each representation 60a-d that may be generated.

The representation 60a may represent the design of the module 36a in a situation in which the module 36a may be chosen for use by the designer. At a step 62, connections to and/or between different cells 40 may be routed within the module 36a by a computer-based routing tool. The routing tool may be configured to automatically define the extent of the reserved portion 44 for the connections within the custom-specific layers 18. The routing tool may automatically determine how many of the custom-specific layers 18 may be occupied by the reserved portion 44. The routing tool may automatically determine and place the connections within the reserved portion 44. At a step 64, the design of the module 36a may be verified by one or more of a Design Rule Check (DRC) tool and a Layout Versus Schematic (LVS) tool. The DRC and/or LVS tools may be computer-based tools for automatically checking that the final design of the module 36a meets predetermined design rules and/or matches the original HDL definition and/or matches the netlist. At a step 66, one or more abstracts of the design of the module 36a may be generated as the representation 60a.

The representation 60b may represent a design of a module 36a' (Figs. 6a and 7). The module 36a' may illustrate an example of the module 36a in a situation in which the module 36a may not be chosen for use by the designer, and all of the cells 40 may be reusable cells 40a. At a step 70, any connections to or between the terminals 46 of the cells 40a within the module design 36a may be removed. In particular, connections to the input terminals 46a and/or the output terminals 46b may be removed. As may be seen in Figs. 6a and 7, the input and output terminals 46a and 46b of all of the cells 40 may be unconnected and, therefore, available for re-use during a future customization (described later). Referring to Fig. 7, within the slice 19, the input terminals 46a may lead to polysilicon gate areas 200. The power supply rails 23a and 23b may be respectfully coupled to diffused regions 202 of the integrated layer 20. The power supply rails 23a and 23b may be of different voltages, for example, VDD and VSS, respectively. The cell 40a may thus be powered and the terminals 46 made accessible for custom connections in the later customization process. Referring back to Fig. 5, at a step 72, verification may be carried out in a similar manner to that described for the step 64. At a step 74, one or more abstracts of the design of the module 36a' may be generated as the representation 60b. The module 36a' may not have a reserved region 44, because there may be no interconnections to the terminals 46 of the cells 40a.

The representation 60c may represent a design of a module 36a" (Figs. 6b and 8). The module 36a" generally represents an example of the module 36a in a situation in which only some of the cells 40 may be reusable cells 40a. As explained previously, the non-reusable cells 40b may comprise cells that may not be suitable for reuse and/or cells that may specifically be excluded according to the particular design situation. At a step 76, any connections to or between the terminals 46 of the cells 40 may be removed, in a similar manner to the step 70. At a step 78, a determination may be made to identify which of the cells 40 are reusable cells 40a, and which are non-reusable cells 40b. For example, the buffer cell (BX) and the inverter cells (NX) may be determined to be reusable cells 40a, and other cells may be determined to be non-reusable cells 40b. At a step 80, the input terminal 46a and/or output terminal 46b for each non-reusable cell 40b may be coupled by a connection 81 to a power line 23a, 23b in the conductive layer 25. The connection 81 may be made in the first interconnection layer 26 of the custom-specific layers 18 adjacent to the slice 19. Connecting at least some of the terminals 46 (e.g. the input terminals) of unused cells 40b to stable voltages may reduce or avoid leakage currents that might otherwise result from floating or undefined signal levels at the terminals 46. The reserved portion 44 may be defined within only the first custom-specific layer 18 adjacent to the slice 19, for accommodating the power connections 81. The terminals of the reusable cells 40a may remain unconnected to a power line. At a step 82, verification may be carried our in a similar manner to that described for the step 64. At a step 84, one or more abstracts of the design of the module 36a" may be generated as the representation 60c.

The representation 60d may represent a design of a module 36a'" (Figs. 6c and 8). The module 36a'" may represent an example of the module 36a in a situation in which the module 36a may not be chosen by the designer for use, and none of the cells 40 of the module 36a may be available for reuse. At a step 86, any connections to or between the terminals 46 of the cells 40 may be removed, in a similar manner to the step 70. At a step 87, the input terminal 46a and/or output terminal 46b for each cell 40b may be coupled by an interconnection 81 to a power line in the power distribution layer 25. As explained previously, connecting the terminals of unused cells 40b may reduce or avoid leakage currents. The reserved portion 44 may be defined within only the first custom-specific layer 18 adjacent to the slice 19, for accommodating the power connections 81. At a step 88, verification may be carried out in a similar manner to that described for the step 64. At a step 89, one or more abstracts of the module 36a"' may be generated as the representation 60d. Although the representation 60d may not contain any re-usable cells 40a, the representation 60d may still be significant because it may contain the definition of the power connections 81 to the terminals 46 and/or the definition of the extent of the reserved portion 44 of the custom-specific layers 18.

The representations 60b and 60c may include additional information (not shown) defining whether the reusable cells 40a may be used as additional sub-circuits within the custom design and/or as repeater sub-circuits for routing. A characteristic of the representations 60 that may be identifiable in the finished die 12 may be the presence of cells 40 for forming a module 36, but which may not be used functionally and may have one or more terminals 46 coupled to a power rail 23.

Additional representations (depicted schematically at 60e) may provide a hierarchical "breakdown" of reusable cells 40a within the module 36a. For example, a general purpose processor module may include a numeric processor sub-module that may be usable as a first reusable cell 40a if the general purpose processor is not used in the custom design. The numeric processor sub-module may itself contain component cells (e.g., buffers, counters, etc.) that may be re-usable as other reusable cells 40a if the numeric processor is not used in the custom design. The hierarchical representations 60e may be generated using a process similar to that of the representations 60a-60d described above.

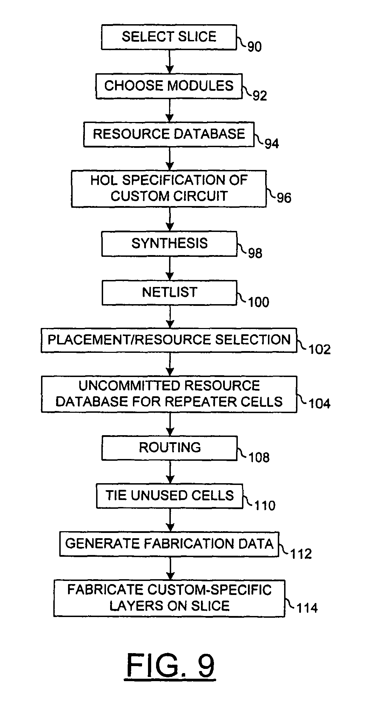

Fig. 9 generally illustrates an example customization process for generating a custom design based on a slice 19, and using the representations 60 described above. The customization process may be carried out after the slice 19 has been pre-fabricated. The customization process may determine a design of the custom-specific layers 18. The customization process may be carried out using one or more computer programs executing on a computer. At a step 90, the designer may select a slice 19 that is suitable (e.g., comprises resources desired) for the general type of circuit application. The slice 19 may be selected from a range of different slices produced by a manufacturer. At a step 92, the designer may indicate, for each module 36 within the slice 19, whether or not to use the respective module 36. At a step 94, a database may be provided or generated of the available resources within the slice 19. The resources may comprise one or more of the general-purpose circuit elements 24, the sub-circuits 34 and the modules 36.

When a particular module 36 is not to be used, the resources may further comprise any re-usable cells 40a of the module 36. The database may include, for each module 36, one or more of the representations 60. The specific representations 60 provided may depend on whether or not the designer may have chosen to use the respective module 36, and on the availability of re-usable cells 40a. At a step 96, the custom circuit may be defined and verified using, in one example, a Hardware Description Language (HDL). At a step 98, the HDL specification may be synthesized using a computer based synthesis tool, and at a step 100, a netlist may be generated. The netlist may define logical connections between resources in the slice 19, without any specific physical layout. At a step 102, a computer-based placement/selection tool may be used to map the netlist to a physical layout of the resources on the slice 19. The placement/selection step 102 may optimise the selection of resources from the general-purpose circuit elements 24, the sub-circuits 34, and any re-usable cells 40a from one or more unused modules 36.

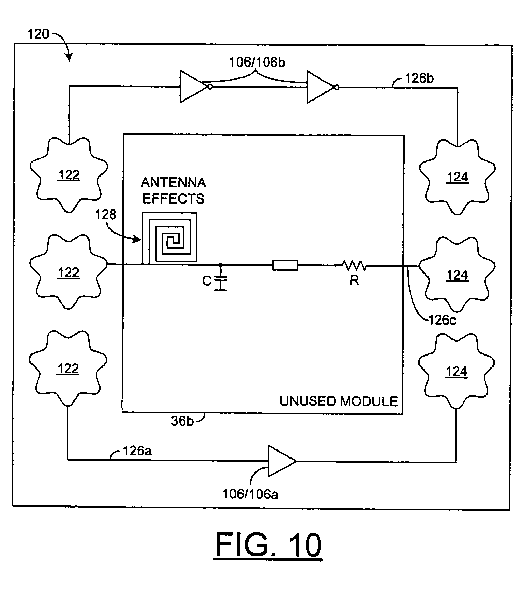

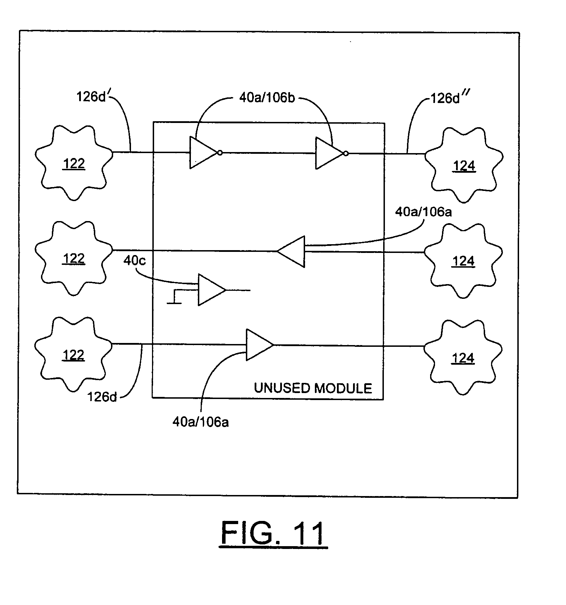

At a step 104, a database may be generated of any resources that may not have been committed during the step 102, and that may be configurable as repeater cells 106 (Figs. 10 and 11) for routing interconnections around the die 12. Each repeater cell 106 may function to preserve the integrity (e.g., voltage level) and/or timing (e.g., slew rate) of a signal that may be routed along a long signal path and/or close to a source of potential interference. The repeater cells 106 may typically comprise a buffer 106a and/or an inverter 106b. In one example, an even number of inverters 106b may be used to preserve a polarity of a logic signal. The repeater cells 106 may be implemented with uncommitted general-purpose circuit elements 24 and/or uncommitted sub-circuits 34 and/or uncommitted reusable cells 40a.

Referring back to Fig. 9, at a step 108, a computer-based routing tool may be used to automatically determine the routes of interconnections (e.g., connecting wires and/or vias) within the interconnection layers 26 of the custom-specific layers 18. Referring to Figs. 10 and 11, the routing tool may be configured to handle routing of a connection 120 from a first point 122 on a first side of an unused module 36b to a second point 124 on another side (e.g., an opposite side) of the module 36b. The routing tool may be configured to route the connection as one of more of a first wire 126a, a second wire 126b, a third wire 126c or a fourth wire 126d. In a first example, the wire 126a (Fig. 10) may be routed around a periphery of the module 36b using a repeater cell in the form of a buffer 106a. In a second example, the wire 126b (Fig. 10) may be routed around a periphery of the module 36b using repeater cells in the form of inverters 106b. A potential disadvantage of wires 126a and/or 126b may be that a length of each wire is relatively long compared to the closest distance between the points 122 and 124. A further disadvantage may be that routing wires around the periphery of the module 36b may cause routing congestion if there are a large number of connections to be made.

In a third example, the wire 126c (Fig. 11) may be routed over the unused module 36b using the interconnection layers 26 without any repeater cell 106. Although the wire 126c may have a shorter length and may avoid peripheral congestion, the wire 126c may have a potential disadvantage. For example, the signal carried by the wire 126c may be vulnerable to parasitic effects, due to an absence of a repeater cell and/or interference with the unused module 36b. Parasitic effects may include, for example, one or more of: a parasitic antenna effect 128; a parasitic capacitance C; a parasitic inductance L, and a parasitic resistance R. The parasitic effects may affect the timing and/or integrity of the signal carried by the wire 126c.

In a fourth example, the wire 126d (Fig. 11) may be implemented with a repeater cell 106a or 106b. The repeater cell 106a or 106b may comprise an uncommitted reusable cell 40a of the unused module 36b. The wire 126d may provide a relatively short signal path and/or may avoid peripheral congestion around the unused module 36b and/or may avoid parasitic effects. When a plurality of reusable cells 40a is available for use as repeater cells, the router tool may route a plurality of wires 126d, 126d' and 126d" across the module 36b using the plurality of reusable cells 40a. For example, the wire 126d may use two spare cells 40a in the form of inverters 106b. The wire 126' may use another spare cell 40a in the form of a buffer 106a. The wire 126" may use another spare cell 40a in the form of a buffer 106a to provide a signal path in an opposite direction to the wires 126d and 126d'. The router tool may be configured automatically to route a signal via the wire 126d in preference to the wires 126a-c. The router tool may be configured automatically to select preferentially an unused cell 40a for routing a connection across the unused module 36b. A similar technique may be used for routing a connection across one or more unused sub-circuits 34. The router may be configured automatically to select preferentially an unused sub-circuit 34 for routing a connection across an array of unused sub-circuits 34.

Referring back to Fig. 9, at a step 110, unused reusable cells 40a and/or unused sub-circuits 34 may be coupled (e.g., tied off) to a power supply rail. For example, an input terminal and/or an output terminal of the respective unused reusable cell 40a and/or unused sub-circuit 34 may be coupled to a power supply rail. As explained previously, coupling a terminal of a cell 40a and/or a sub-circuit 34 to a power supply rail may reduce or avoid leakage currents. As illustrated in Fig. 11, a cell 40c may be a reusable cell 40a that is unused (e.g., the cell 40c may not be used during the selection/placement step 102 and/or during the routing step 108). An input of the cell 40c may be coupled to a power supply rail, for example, ground.

Referring again to Fig. 9, at a step 112, fabrication data may be generated for fabricating the die 12. The die 12 may be fabricated at step 114 based on the fabrication data. When the slice 19 is pre-fabricated, the fabrication data may define the custom-specific layers 18 for customizing the pre-fabricated slice 19 to form the die 12. When the slice 19 is not pre-fabricated, the fabrication data may define the custom-independent layers 16 and the custom-specific layers 18 of the die 12 for fabrication.

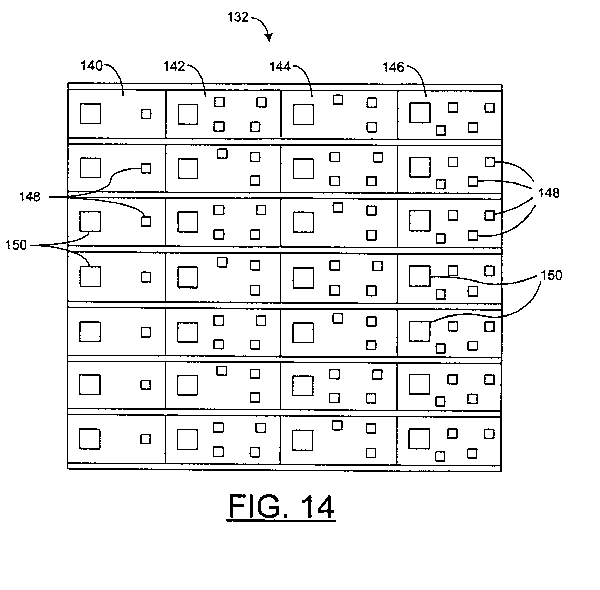

Referring to Figs. 12-14, diagrams are shown illustrating another embodiment of a slice 19a for a semiconductor die 12a. The slice 19a may have any or all of the features (including design and fabrication features) of the slice 19. The same reference numerals may denote features equivalent to the slice 19. The slice 19a may include a general-purpose circuit area 32a and a plurality of standard circuit areas 30a. Although not shown explicitly in Fig. 12, the slice 19a may also include one or more special circuit areas (similar to the slice 19). A characteristic of the slice 19a may be a distribution of the standard cell areas 30 across the slice 19a. The standard cell areas 30 may be distributed such that the sub-circuits 34a may be available locally at different locations across the slice 19a.

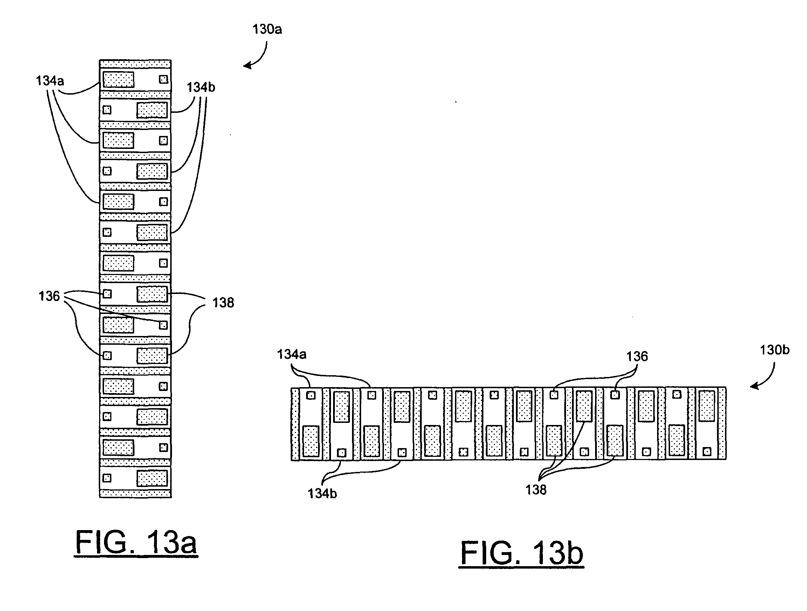

The sub-circuits 34a may be selected to be useful for the general type of circuit application for which the slice 19a may be intended. In the illustrated embodiment, the sub-circuits 34a may include buffer arrays 130a, 130b, and glue logic arrays 132. The buffer arrays may include two types of array 130a and 130b arranged orthogonally with respect to each other. The buffer arrays 130a and 130b may be arranged on a grid pattern. A grid pattern of orthogonal arrays 130a, 130b may provide excellent versatility for optimum placement/selection of the slice resources for implementing a custom circuit. Referring to Figs. 13a and 13b, each of the arrays 130a and 130b may comprise a generally elongate array of buffer sub-circuits 134a and 134b. Each buffer sub-circuit 134a and 134b may include an input terminal 136 and an output terminal 138. The terminals 136 and 138 may be located towards opposite ends of the respective buffer sub-circuits 134a and 134b. Adjacent buffer sub-circuits 134a and 134b may be arranged with alternate orientations. The alternate orientations may further improve the versatility for optimum placement/selection of the slice resources for implementing the custom circuit.

The glue logic arrays 132 may comprise, for example, sub-circuits 140-146 that may be used individually or combined to provide different functionality. Each sub-circuit 140-146 may include at least one input terminal 148 and at least one output terminal 150. The sub-circuits may comprise one or more buffers 140 and/or one or more gates 142 (for example, XOR gates) and/or one or more multiplexers 144 and/or one or more flip-flops 146. The glue logic arrays 132 may be two-dimensional arrays of repetitions of the sub-circuits 140-146. The glue-logic arrays 132 may be arranged generally centrally in each unit of the grid pattern defined by the orthogonal buffer arrays 130a and 130b. A central arrangement of the glue-logic arrays 132 may provide excellent versatility for optimum placement/selection of the slice resources for implementing the custom circuit.

In a similar manner to the slice 19, during the design of the custom-specific layers 18 (not shown in Fig. 12) for implementing the custom circuit, the input terminals 136 or 148 and/or the output terminals 138 or 150 of any of the sub-circuits 134a that may not be used, may be coupled to one or more power supply rails. Coupling the terminal(s) 136, 148, 138 and/or 150 to the power supply rail(s) may avoid or reduce leakage currents.

The functions performed by the flow diagrams of Figs. 5 and 9 may be implemented using a conventional general purpose digital computer programmed according to the teachings of the present specification, as will be apparent to those skilled in the relevant art(s). Appropriate software coding can readily be prepared by skilled programmers based on the teachings of the present disclosure, as will also be apparent to those skilled in the relevant art(s).

The present invention may also be implemented by the preparation of ASICs, FPGAs, or by interconnecting an appropriate network of conventional component circuits, as is described herein, modifications of which will be readily apparent to those skilled in the art(s).

The present invention thus may also include a computer product which may be a storage medium including instructions which can be used to program a computer to perform a process in accordance with the present invention. The storage medium can include, but is not limited to, any type of disk including floppy disk, optical disk, CD-ROM, and magneto-optical disks, ROMs, RAMs, EPROMs, EEPROMs, Flash memory, magnetic or optical cards, or any type of media suitable for storing electronic instructions.

The present invention may also include a storage medium including a representation of design data of a circuit and/or slice and/or die in accordance with the present invention. The design data may be a representation prior to customization and/or after customization. The design data may include a representation of custom-specific layers and/or custom-independent layers. The design data may be data for fabrication. The storage medium can include, but is not limited to, any type of disk including floppy disk, optical disk, CD-ROM, and magneto-optical disks, ROMs, RAMs, EPROMs, EEPROMs, Flash memory, magnetic or optical cards, or any type of media suitable for storing electronic instructions.

While the invention has been particularly shown and described with reference to the preferred embodiments thereof, it will be understood by those skilled in the art that various changes in form and details may be made without departing from the sprit and scope of the invention.

## Claims

1. An integrated circuit comprising:
a die having a surface;
a first area of first circuit cells in said die configurable by user defined interconnections from above said surface;
a second area comprising a plurality of sub-circuit cells forming a module having a predefined functionality, wherein said sub-circuit cells include at least one second circuit cell configured such that when said predefined functionality of said module is not used, said second circuit cell is configurable by user defined interconnections from above said surface.

2. The integrated circuit of claim 1, wherein said second circuit cell comprises at least one of a buffer circuit cell, an inverter circuit cell, a flip-flop circuit cell, a latch circuit cell, a multiplexer circuit cell, an exclusive-OR gate circuit cell, an AND gate circuit cell, and an OR gate circuit cell.

3. The integrated circuit of claim 1, wherein said sub-circuit cells comprise a plurality of said second circuit cells.

4. The integrated circuit of claim 3, wherein said plurality of second circuit cells comprises a plurality of different circuit cell types.

5. The integrated circuit of claim 1, wherein each of said first circuit cells comprises an input terminal at said surface and an output terminal at said surface.

6. The integrated circuit of claim 1, wherein said at least one second circuit cell comprises a first input terminal at said surface and a first output terminal at said surface.

7. The integrated circuit of claim 6, further comprising:
at least one layer of conductive interconnections formed on said surface;
wherein said first input terminal is coupled by a respective conductive interconnection in said layer to a stable signal line.

8. The integrated circuit of claim 7, wherein said stable signal line is a stable voltage line.

9. The integrated circuit of claim 8, wherein said stable voltage line is a power rail.

10. The integrated circuit of claim 7, further comprising at least one used sub-circuit cell disposed among said unused circuit cells.

11. The integrated circuit of claim 10, wherein said used sub-circuit cell comprises a second input terminal at said surface and a second output terminal at said surface.

12. The integrated circuit of claim 10, wherein said used sub-circuit cell is configured as a repeater cell in a routing connection across said area.

13. The integrated circuit of claim 12, wherein said routing connection comprises (i) a first interconnection extending in said layer across a first portion of said area to said second input terminal, and (ii) a second interconnection extending in said layer across a second portion of said area from said second output terminal.

14. The integrated circuit of claim 12, wherein said used sub-circuit cell comprises at least one of a buffer cell and an inverter cell.

15. An integrated circuit comprising:
a die having a surface;
a first general purpose area of said die containing general purpose circuit elements configurable by user defined interconnections from above said surface; and
a plurality of second standard circuit areas containing standard sub-circuits more complicated than said general purpose circuit elements and configurable by user defined interconnections from above said surface;
wherein said plurality of second standard circuit areas are distributed across said first general purpose area at multiple locations and provide locally usable resources at said multiple locations in said first general purpose area.

16. The integrated circuit of claim 15, wherein said plurality of second standard circuit areas are distributed in a substantially uniform pattern.

17. The integrated circuit of claim 15, wherein said plurality of second standard circuit areas are distributed according to a repeating pattern.

18. The integrated circuit of claim 15, wherein said plurality of second standard circuit areas comprise a plurality of circuit arrays.

19. The integrated circuit of claim 15, wherein said general purpose circuit elements comprise logic circuits.

20. The integrated circuit of claim 15, wherein said general purpose circuit elements comprise one or more logic gates.

21. The integrated circuit of claim 15, wherein said standard sub-circuits comprise logic circuits.

22. The integrated circuit of claim 15, wherein said standard sub-circuits comprise a first buffer array circuit cell.

23. The integrated circuit of claim 22, wherein said first buffer array circuit cell comprises an array of buffer circuits, wherein (i) each buffer circuit comprises an input terminal and an output terminal, and (ii) adjacent buffer circuits are oppositely orientated.

24. The integrated circuit of claim 22 wherein said standard sub-circuits further comprise a second buffer array circuit cell extending in a different physical direction from said first buffer array circuit cell.

25. The integrated circuit of claim 24, wherein said standard sub-circuits further comprise general purpose logic circuits more complicated than said general purpose circuit elements.

26. The integrated circuit of claim 25, wherein said general purpose logic circuits comprise at least one of:
an individual buffer;
a logic gate different from said general purpose circuit elements;
a multiplexer; and
a flip flop.

27. The integrated circuit of claim 15, further comprising:
at least one layer of conductive interconnections formed on said surface;
wherein (i) said general purpose circuit elements are coupled to said conductive interconnections in said at least one layer, and (ii) said standard sub-circuits are coupled to said conductive interconnections in said at least one layer.

28. A method for designing an integrated circuit element, comprising the steps of:
(a) providing a first area of said integrated circuit element comprising first circuit cells configurable by user defined interconnections above a surface of said integrated circuit element; and
(b) providing a second area of said integrated circuit element comprising a plurality of sub-circuit cells forming a module having a predefined functionality, wherein said sub-circuit cells include at least one second circuit cell configured such that when said predefined functionality of said module is not used, said second circuit cell is configurable by user defined interconnections from above said surface.
